(19) Europäisches Patentamt
European Patent Office
Office européen des brevets

(11) EP 2 974 927 A1

(12) **EUROPEAN PATENT APPLICATION**
published in accordance with Art. 153(4) EPC

(43) Date of publication:
**20.01.2016 Bulletin 2016/03**

(21) Application number: **14762537.0**

(22) Date of filing: **12.03.2014**

(51) Int Cl.:
***B60W 10/04*** *(2006.01)* ***B60W 10/06*** *(2006.01)*
***B60W 10/101*** *(2012.01)* ***B60W 30/14*** *(2006.01)*
***F02D 11/10*** *(2006.01)* ***F02D 41/04*** *(2006.01)*
***F16H 61/02*** *(2006.01)* ***F16H 61/66*** *(2006.01)*

(86) International application number:
**PCT/JP2014/056585**

(87) International publication number:
**WO 2014/142212 (18.09.2014 Gazette 2014/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.03.2013 JP 2013049640**

(71) Applicant: **Yamaha Hatsudoki Kabushiki Kaisha**
**Iwata-shi, Shizuoka 438-8501 (JP)**

(72) Inventor: **ISHIOKA, Kazutoshi**
**Iwata-shi**
**Shizuoka 438-8501 (JP)**

(74) Representative: **Grünecker Patent- und Rechtsanwälte**
**PartG mbB**
**Leopoldstraße 4**
**80802 München (DE)**

## (54) VEHICLE CONTROL DEVICE, AND MOTORCYCLE PROVIDED THEREWITH

(57) Provided is a control device which can drive an engine at an engine rotation speed which can realize a comfortable riding feeling and can match an actual vehicle speed with a target vehicle speed in a vehicle speed control mode. A target engine rotation speed calculation unit (12) calculates a target engine rotation speed. A target transmission ratio calculation unit (13) calculates a target transmission ratio of the continuously variable transmission (5) on the basis of the target engine rotation speed. A target drive force calculation unit (15) calculates a target value related to drive force of the vehicle on the basis of an accelerator operation amount detected by a sensor and the target engine rotation speed. A target throttle opening calculation unit (16) calculates a target throttle opening on the basis of the target value related to drive force of the vehicle and the target engine rotation speed so that a drive force corresponding to the target value can be obtained in a case where the normal traveling mode is selected. The target throttle opening calculation unit (16) calculates a target throttle opening so that the actual vehicle speed matches a target vehicle speed in a case where the vehicle speed control mode is selected.

FIG.4

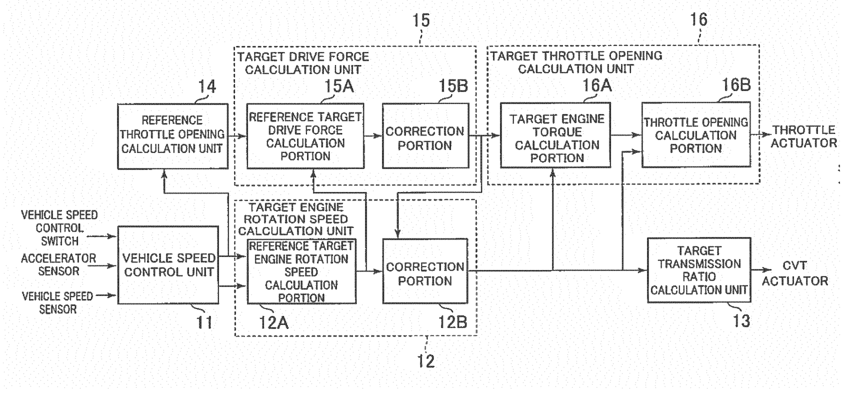


EP 2 974 927 A1

## Description

### Technical Field

The present invention relates to a vehicle control device which electronically controls both opening of a throttle valve for adjusting amount of air supplied to an engine and transmission ratio of a continuously variable transmission.

### Background Art

In the related art, there is a vehicle control device which electronically controls transmission ratio of a continuously variable transmission and opening of a throttle valve (hereinafter, referred to as a throttle opening) by using an actuator (for example, refer to Japanese Patent No. 3754188). In the control of the related art, first, a required drive force is calculated on the basis of an operation amount of an accelerator (an accelerator operation amount) operated by driver, and a vehicle speed. Then, a target engine rotation speed and a target throttle opening are calculated so that the required drive force is obtained.

### Summary of Invention

### Technical Problem

In a motorcycle, engine rotation speed more considerably influences riding feeling of riders than in a four-wheeled vehicle, and thus there is a strong need for an engine rotation speed at which a comfortable riding feeling is realized. However, in the control of the related art, a required drive force is first calculated, and then a target engine rotation speed is calculated so that the required drive force is obtained. In such control of the related art, since the target engine rotation speed is influenced by the required drive force, it may be difficult to control engine rotation speed so that a comfortable riding feeling is obtained.

In addition, there is a need for a vehicle which has not only a normal control mode (normal traveling mode) in which a vehicle speed changes in response to an accelerator operation but also a control mode (a so-called cruise control mode or an automatic cruise mode; hereinafter, referred to as a vehicle speed control mode) in which actual vehicle speed is maintained as a target vehicle speed regardless of a change of accelerator operation and which allows the normal traveling mode and the vehicle speed control mode to be selected.

An object of the present invention is to provide a control device of a motorcycle which electronically controls transmission ratio of a continuously variable transmission and throttle opening, and can control engine rotation speed so that a comfortable riding feeling can be obtained and can match actual vehicle speed with a target vehicle speed as necessary, and a motorcycle provided therewith.

### Solution to Problem

According to the present invention, there is provided a control device which controls a transmission ratio of a continuously variable transmission and a throttle opening and in which a normal traveling mode and a vehicle speed control mode are selectable as a control mode. The control device includes: a target engine rotation speed calculation unit that calculates a target engine rotation speed; a target transmission ratio calculation unit that calculates a target transmission ratio of the continuously variable transmission on the basis of the target engine rotation speed; a target drive force calculation unit that calculates a target value related to drive force of the vehicle on the basis of an accelerator operation amount detected by a sensor and the target engine rotation speed; and a target throttle opening calculation unit that calculates a target throttle opening on the basis of the target value related to drive force of the vehicle and the target engine rotation speed so that a drive force corresponding to the target value can be obtained in a case where the normal traveling mode is selected, and calculates a target throttle opening so that an actual vehicle speed matches a target vehicle speed which is a target for vehicle speed in a case where the vehicle speed control mode is selected. A motorcycle according to the present invention includes the control device.

According to the present invention, in contrast to the control of the related art, a target engine rotation speed is first calculated, and then a target value related to drive force is calculated. For this reason, it is possible to reduce a influence of the target value related to drive force of a vehicle to the target engine rotation speed. As a result, it becomes easier to control engine rotation speed so that comfortable riding feeling can be obtained. In addition, in a case where the vehicle speed control mode is selected, actual vehicle speed can be caused to match a target vehicle speed. The target value related to drive force of the vehicle is, for example, a target value for torque of a drive wheel or a target value for power of the drive wheel. Alternatively, the target value related to drive force of the vehicle may be a target value for engine torque, a target value for engine power, a target value for acceleration of the vehicle, and the like (a product of the acceleration of the vehicle and a vehicle weight leads to drive force of the vehicle).

The control device may further include a vehicle speed control unit that calculates a vehicle speed difference cancel value which is a value corresponding to a difference between the actual vehicle speed and the target vehicle speed. The target engine rotation speed calculation unit may calculate the target engine rotation speed on the basis of an accelerator operation amount detected by the sensor in a case where the normal traveling mode is selected, and calculate the target engine rotation speed on the basis of the vehicle speed difference cancel value instead of the accelerator operation amount in a case where the vehicle speed control mode is selected. With this configuration, since the vehicle speed difference cancel value is used instead of the accelerator operation amount in the vehicle speed control mode, engine rotation speed does not change even if the accelerator operation amount changes. For this reason, it is possible to prevent a change in drive force of the vehicle due to a change in engine rotation speed and thus to easily stabilize vehicle speed.

The target drive force calculation unit may calculate the target value related to drive force of the vehicle on the basis of an accelerator operation amount detected by the sensor and the target engine rotation speed in a case where the normal traveling mode is selected, and calculate the target value related to drive force of the vehicle on the basis of the vehicle speed difference cancel value instead of the accelerator operation amount and the target engine rotation speed in a case where the vehicle speed control mode is selected. The target throttle opening calculation unit may calculate the target throttle opening on the basis of the target value related to drive force of the vehicle which is calculated by using the vehicle speed difference cancel value and the target engine rotation speed, so that the actual vehicle speed matches the target vehicle speed in a case where the vehicle speed control mode is selected. With this configuration, in the vehicle speed control mode, the vehicle speed difference cancel value is used instead of the accelerator operation amount in both of calculation of the target value related to drive force and calculation of the target engine rotation speed. As a result, in the vehicle speed control mode, since a change in accelerator operation amount does not influence the target value related to drive force and the target engine rotation speed, it is possible to easily perform control in the vehicle speed control mode.

The target engine rotation speed calculation unit may correct the target engine rotation speed in a case where the normal traveling mode is selected and in a case where the vehicle speed control mode is selected. With this configuration, the target engine rotation speed can be corrected in both of the normal traveling mode and the vehicle speed control mode.

The target drive force calculation unit may calculate the target value related to drive force of the vehicle on the basis of an accelerator operation amount detected by the sensor and the target engine rotation speed before being corrected in a case where the normal traveling mode is selected, and calculate the target value related to drive force of the vehicle on the basis of the vehicle speed difference cancel value and the target engine rotation speed before being corrected in a case where the vehicle speed control mode is selected. The target throttle opening calculation unit may calculate the target throttle opening on the basis of the target engine rotation speed after being corrected and the target value related to drive force of the vehicle. With this configuration, in the normal traveling mode, it is possible to drive the engine at the target engine rotation speed after being corrected, and also to obtain a drive force corresponding to the target value which is calculated on the basis of the engine rotation speed before being corrected and the accelerator operation amount. In addition, in the vehicle speed control mode, it is possible to drive the engine at the target engine rotation speed after being corrected, and also to obtain a drive force corresponding to the target value which is calculated on the basis of the engine rotation speed before being corrected and the vehicle speed difference cancel value.

The target drive force calculation unit may correct the target value related to drive force of the vehicle in a case where the normal traveling mode is selected and in a case where the vehicle speed control mode is selected. With this configuration, the target value related to drive force can be corrected in both of the normal traveling mode and the vehicle speed control mode.

## Brief Description of Drawings

[Fig. 1] Fig. 1 is a side view of a motorcycle including a control device according to an embodiment of the present invention.

[Fig. 2] Fig. 2 is a block diagram illustrating a configuration of the motorcycle.

[Fig. 3] Fig. 3 illustrates a summary of control performed by the control device.

[Fig. 4] Fig. 4 is a block diagram illustrating a process performed by the control device.

[Fig. 5] Fig. 5 is a diagram illustrating an example of an engine rotation speed map.

[Fig. 6] Fig. 6 is a block diagram illustrating a process performed by a control device according to another embodiment of the present invention.

[Fig. 7] Fig. 7 is a block diagram illustrating a process performed by a control device according to still another embodiment of the present invention.

Description of Embodiments

Hereinafter, an embodiment of the present invention will be described with reference to the drawings. Fig. 1 is a side view of a motorcycle 1 provided with a control device 10 according to the embodiment of the present invention. Fig. 2 is a block diagram illustrating a configuration of the motorcycle 1.

As illustrated in Fig. 1, the motorcycle 1 includes a front wheel 2 and a rear wheel 8. The motorcycle 1 includes a vehicle speed sensor 27 (refer to Fig. 2) which detects a vehicle speed. The vehicle speed sensor 27 is provided in the front wheel 2 or the rear wheel 8, and outputs a signal corresponding to a rotation speed thereof. The control device 10 calculates a vehicle speed on the basis of an output signal from the vehicle speed sensor 27. The motorcycle 1 includes a steering assembly 3 for turning the front wheel 2. Grips 3a are provided on both sides of the steering assembly 3. One grip 3a functions as an accelerator grip, and the accelerator grip is provided with an accelerator sensor 24 (refer to Fig. 2) for detecting an operation amount thereof (accelerator operation amount).

As illustrated in Fig. 2, the motorcycle 1 includes a continuously variable transmission (hereinafter, referred to as a CVT) 5, a clutch 6, and a final deceleration mechanism 7 on a torque transmission path from an engine 4 to the rear wheel 8 which is a drive wheel. In the present example, the CVT 5 is disposed on the downstream side of the engine 4, and the clutch 6 is disposed on the downstream side of the CVT 5. In addition, the final deceleration mechanism 7 is disposed between the clutch 6 and the rear wheel 8. The clutch 6 is an automatic clutch such as a centrifugal clutch.

The engine 4 includes a cylinder, a piston disposed inside the cylinder, a crank shaft connected to the piston, and the like. The motorcycle 1 includes an engine rotation speed sensor 21 which detects an engine rotation speed. In addition, the engine 4 includes a throttle valve which controls an amount of air supplied to the engine 4 and an injector which supplies fuel to the engine 4 in an intake passage connected to a combustion chamber thereof. The motorcycle 1 includes a throttle opening sensor 22 which detects an opening of the throttle valve (throttle opening), and a throttle actuator 23 which controls the throttle valve.

The CVT 5 includes an input shaft interlocking with the crank shaft, a driving pulley which is disposed on the input shaft, an output shaft, a driven pulley which is disposed on the output shaft, and a belt which held on the driving pulley and the driven pulley and transmits rotation (torque) from the driving pulley to the driven pulley. The motorcycle 1 includes a CVT actuator 25 which controls a transmission ratio of the CVT 5. The CVT actuator 25 controls the transmission ratio, for example, by moving one of two sheaves constituting the driving pulley. Alternatively, the CVT actuator 25 may control the transmission ratio, for example, by moving one of two sheaves constituting the driven pulley. The CVT 5 is provided with an output shaft rotation speed sensor 26 which detects a rotation speed of the output shaft of the CVT 5.

As illustrated in Fig. 2, the motorcycle 1 includes a control device 10. The control device 10 includes a storage device 10c and a microprocessor executing a program stored in the storage device 10c. The storage device 10c stores a map used to control the engine 4 and the CVT 5. The control device 10 may include a microprocessor which mainly controls the engine 4 and a microprocessor which mainly controls the CVT 5. In this case, the two microprocessors perform communication according to a predefined protocol and transmit and receive information which is calculated by each microprocessor. Output signals from the sensors 21, 22, 24, 26 and 27 are input to the control device 10. The control device 10 moves the actuators 23 and 25 on the basis of the output signals from the sensors 21, 22, 24, 26 and 27 so as to control the CVT 5 and the engine 4. The control device 10 controls a transmission ratio of the CVT 5 via the CVT actuator 25 and controls a throttle opening via the throttle actuator 23.

The control device 10 of the present embodiment has a vehicle speed control mode and a normal traveling mode as the control mode thereof. In the vehicle speed control mode, target throttle opening is set so that actual vehicle speed matches a target vehicle speed. In the normal traveling mode, the above-described control for matching actual vehicle speed with a target vehicle speed is not performed, and, as will be described later in detail, a target engine rotation speed or a target throttle opening is set on the basis of an accelerator operation amount detected by the accelerator sensor 24. As illustrated in Fig. 2, the motorcycle 1 includes a vehicle speed control switch 28 which can be operated by driver. The vehicle speed control switch 28 includes, for example, a switch which allows a rider to output an instruction for selecting the vehicle speed control mode, a switch which allows the rider to output an instruction for increasing a speed, and a switch which allows the rider to output an instruction for decreasing a speed. The control device 10 selects the vehicle speed control mode, increases a target vehicle speed, or decreases a target vehicle speed, on the basis of the output signal from each switch. The control device 10 changes the mode from the vehicle speed control mode to the normal traveling mode, for example, when the switch for outputting the instruction for selecting the vehicle speed control mode is turned off, or an operation member (a brake lever or a brake pedal) for activating a brake device is operated.

In addition, the control device 10 of the present embodiment may perform one or both of rotation speed correction which is a correction on target engine rotation speed and drive force correction which is a correction on target value related to drive force of the vehicle. Both of the corrections may be performed in both of the vehicle speed control mode and the normal traveling mode.

Fig. 3 illustrates the summary of control performed by the control device 10. In Fig. 3, a transverse axis expresses engine rotation speed, and a longitudinal axis expresses engine torque. In Fig. 3, torque curves indicating relationships between engine torque and engine rotation speed are drawn. Fig. 3 (a) illustrates torque curves corresponding to throttle openings Th1 and Th2, and Fig. 3(b) illustrates torque curves corresponding to throttle openings Th1, Th4 and Th6. In Figs. 3(a) and 3(b), a line A is a curve (hereinafter, referred to as a best fuel consumption curve) indicating driving points at which fuel consumption is best. In Figs. 3 (a) and 3(b), a line L3 and a line L4 are equal power curves. At driving points on the line L3, the same engine power (engine torque × engine rotation speed) as at a driving point P1 (engine rotation speed N1, throttle opening Th1) can be obtained. At driving points on the line L4, the same engine power as at a driving point P4 can be obtained.

First, the control device 10 calculates a reference target engine rotation speed N1. The reference target engine rotation speed N1 is calculated on the basis of an accelerator operation amount detected by the sensor in the normal traveling mode. In the vehicle speed control mode, the control device 10 calculates a value (hereinafter, referred to as, a vehicle speed difference cancel value) corresponding to a difference between an actual vehicle speed and a vehicle speed that is a target (hereinafter, referred to as a target vehicle speed), and calculates the reference target engine rotation speed N1 on the basis of the vehicle speed difference cancel value instead of accelerator operation amount.

[In Case Where Rotation Speed Correction is Performed]

In a case where the rotation speed correction is performed, the control device 10 corrects the reference target engine rotation speed N1 and sets the corrected engine rotation speed as a target engine rotation speed. Hereinafter, a corrected engine rotation speed, and a reference target engine rotation speed used when the rotation speed correction is not performed are referred to as final target engine rotation speed. In a case where the rotation speed correction is performed, the control device 10 corrects the reference target engine rotation speed so that fuel consumption is more improved than in a case of driving the engine 4 at the reference target engine rotation speed, and sets an engine rotation speed obtained through the correction as a final target engine rotation speed. For example, as illustrated in Fig. 3(a), the control device 10 sets a final target engine rotation speed N2 to be located between the reference target engine rotation speed N1 and the best fuel consumption engine rotation speed N3, or the control device 10 gradually changes the final target engine rotation speed N2 from the reference target engine rotation speed N1 to the best fuel consumption engine rotation speed N3. The control device 10 may subtract a predetermined rotation speed from the reference target engine rotation speed N1 and may set the subtraction result as the final target engine rotation speed N2. The control device 10 calculates a target transmission ratio of the CVT 5 on the basis of the final target engine rotation speed N2, and the control device 10 drives the CVT actuator 25 so that actual transmission ratio matches the target transmission ratio.

As described above, the engine rotation speed at the driving point P1 illustrated in Fig. 3(a) is the reference target engine rotation speed N1. In addition, the throttle opening Th1 at the driving point P1 is a value obtained by converting the accelerator operation amount into angle of the throttle valve in the normal traveling mode. Further, the throttle opening Th1 is a value obtained by converting a vehicle speed difference cancel value into angle of the throttle valve in the vehicle speed control mode. In a case where the control device 10 performs only the rotation speed correction and does not perform the drive force correction, the control device 10 sets the target throttle opening so that the engine power (power indicated by the line L3) at the driving point P1 can be obtained, while driving the engine 4 at the final target engine rotation speed N2. In this case, the throttle opening Th2 at the driving point P2 is set as the target throttle opening. The driving point P2 has the same engine power as at the driving point P1 and the final target engine rotation speed N2. The control device 10 drives the throttle actuator 23 so that actual throttle opening matches the target throttle opening Th2.

The control device 10 performs the following process in order to calculate the target throttle opening in a case of performing the rotation speed correction and not performing the drive force correction. In the normal traveling mode, the control device 10 calculates a drive force of the vehicle at the driving point P1 on the basis of the reference target engine rotation speed N1 and an accelerator operation amount (specifically, the throttle opening Th1 converted from an accelerator operation amount), and sets the calculated drive force as the target value related to drive force of the vehicle. The target value related to drive force is, for example, a target value for torque of the rear wheel 8 or a target value for power of the rear wheel 8. Alternatively, the target value related to drive force may be a target value for engine torque, a target value for engine power, a target value for acceleration of the vehicle, or the like. The control device 10 calculates a target value related to drive force, and then calculates the target throttle opening Th2 on the basis of the final target engine rotation speed N2 and the target value related to drive force so that a drive force corresponding to the target value can be obtained, while driving the engine 4 at the final target engine rotation speed N2. Torque of the rear wheel 8 or power of the rear wheel 8 is proportional to engine power. For this reason, as illustrated in Fig. 3(a), if torque of the rear wheel 8 or power of the rear wheel 8 at the driving point P1 is set as a target value, the engine 4 can be driven at the final target engine rotation speed while the engine power at the driving point P1 is maintained.

In the vehicle speed control mode, the control device 10 performs the same process as in the normal traveling mode by using a vehicle speed difference cancel value instead of the accelerator operation amount, and calculates the target throttle opening. In other words, the control device 10 calculates the drive force of the vehicle at the driving point P1 on the basis of the reference target engine rotation speed N1 and the vehicle speed difference cancel value (specifically, the throttle opening Th1 converted from the vehicle speed difference cancel value), and sets the calculated drive force as the target value. In addition, the control device 10 calculates the throttle opening Th2 on the basis of the final target engine rotation speed N2 and the target value so that a drive force corresponding to the target value can be obtained, while driving the engine 4 at the final target engine rotation speed N2.

[In Case Where Drive Force Correction is Performed]

As described above, the control device 10 sets the reference target engine rotation speed N1 as the final target engine rotation speed in a case where the rotation speed correction is not performed. In a case where the rotation speed correction is not performed, and the drive force correction is performed, the control device 10 sets the target throttle opening so that an engine power higher or lower than the engine power at the driving point P1 can be obtained, while driving the engine 4 at the final target engine rotation speed N1. For example, as illustrated in Fig. 3(b), the control device 10 sets the throttle opening Th4 at a driving point P4 as the target throttle opening so that the engine power indicated by the line L4 which is higher than the engine power indicated by the line L3 can be obtained, while driving the engine 4 at the final target engine rotation speed N1. The driving point P4 is a driving point on the line L4 corresponding to the engine rotation speed N1.

In a case where the rotation speed correction is not performed, and the drive force correction is performed, the control device 10 performs the following process in order to calculate the target throttle opening. In a case where the drive force correction is performed in the normal traveling mode, the control device 10 calculates a drive force of the vehicle at the driving point P1 on the basis of the reference target engine rotation speed N1 and the accelerator operation amount (specifically, the throttle opening Th1 converted from the accelerator operation amount), and sets the calculated drive force as the target value related to drive force. As described above, the target value related to drive force is, for example, a target value for torque of the rear wheel 8, a target value for power of the rear wheel 8, a target value for engine torque, a target value for engine power, or a target value of acceleration of the vehicle. Hereinafter, this target value (the drive force at the driving point P1 in Fig. 3) is referred to as reference target drive force. In a case where the drive force correction is performed, the control device 10 corrects the reference target drive force, and sets the corrected drive force as the target drive force. The control device 10 calculates the target throttle opening Th4 on the basis of the final target engine rotation speed N1 and the target drive force so that the target drive force is obtained, while driving the engine 4 at the final target engine rotation speed N1 (which is the same as the reference target engine rotation speed in a case where the rotation speed correction is not performed).

In a case where the drive force correction is performed in the vehicle speed control mode, the control device 10 calculates a drive force of the vehicle at the driving point P1 on the basis of the reference target engine rotation speed N1 and the vehicle speed difference cancel value (specifically, the throttle opening Th1 converted from the vehicle speed difference cancel value), and sets the calculated drive force as a reference target drive force. In addition, the control device 10 corrects the calculated reference target drive force, and sets the corrected drive force as the target drive force. Further, the control device 10 calculates the target throttle opening Th4 on the basis of the final target engine rotation speed N1 and the target drive force so that the target drive force is obtained, while driving the engine 4 at the final target engine rotation speed N1.

In a case where the control device 10 does not perform the drive force correction, the reference target drive force is set as the target drive force without a change of the reference target drive force.

As mentioned above, in the present embodiment, a target engine rotation speed is first calculated, and then a target value (that is a reference target drive force and a target drive force) related to drive force is calculated, in contrast to the control of the related art. For this reason, it is possible to reduce an influence of the target value related to drive force of a vehicle to the target engine rotation speed. As a result, it becomes easier to control engine rotation speed so that a comfortable riding feeling can be obtained. Particularly, in the present embodiment, a target value related to drive force of the vehicle is calculated on the basis of an accelerator operation amount and a reference target engine rotation speed, and a target throttle opening is calculated on the basis of the final target engine rotation speed and the target value related to drive force. For this reason, for example, it is possible to adjust and control drive force of the vehicle while maintaining a rotation speed of the engine 4 as the final target engine rotation speed. For example, while maintaining a rotation speed of the engine 4 as the final target engine rotation speed, it is possible to obtain the same drive force as a drive force which is obtained in a case where the engine 4 is driven at a throttle opening corresponding to the accelerator operation amount and at the reference target engine rotation speed. In the example illustrated in Fig. 3(a), the engine 4 can be driven at the driving point P2. In a case where the target drive force is corrected (more specifically, the reference target drive force is corrected), the engine 4 can be driven so that the corrected target drive force can be obtained while maintaining a rotation speed of the engine 4 as the final target engine rotation speed. In the example illustrated in Fig. 3(b), the engine 4 can be driven at the driving point P4.

In addition, in the vehicle speed control mode, the vehicle speed difference cancel value is used instead of the accelerator operation amount, and the reference target engine rotation speed is calculated on the basis of the vehicle speed difference cancel value. For this reason, also in the vehicle speed control mode, in the same manner as in the normal traveling mode, the rotation speed correction can be performed in which the reference target engine rotation speed is corrected and the result thereof is set as the final target engine rotation speed. Referring to Fig. 3(a), also in the vehicle speed control mode, the engine 4 can be driven at the driving point P2. Further, in the vehicle speed control mode, even if the accelerator operation amount changes, it is possible to prevent the engine rotation speed from changing due to the change in the accelerator operation amount. As a result, it is possible to reliably prevent drive force of the vehicle from changing due to the change in the engine rotation speed.

Still further, the vehicle speed difference cancel value is used instead of the accelerator operation amount, and the target value related to drive force (reference target drive force) is calculated on the basis of the vehicle speed difference cancel value. For this reason, also in the vehicle speed control mode, in the same manner as in the normal traveling mode, the drive force correction can be performed in which the target value related to drive force of the vehicle is corrected. Referring to Fig. 3(b), also in the vehicle speed control mode, the engine 4 can be driven at the driving point P4.

The rotation speed correction and the drive force correction are performed when a predefined condition is satisfied. For example, in the motorcycle provided with an operation member which allows the two corrections to be selected, driver selects one or both of the two corrections by using the operation member. The control device 10 performs correction corresponding to the operation. In addition, if it is detected that the vehicle is traveling on an uphill road, the control device 10 may perform the drive force correction. Further, in a case where the vehicle performs steady traveling for a predefined time, the control device 10 may perform the rotation speed correction.

[In Case Where Both of Rotation Speed Correction and Drive Force Correction are Performed]

The control device 10 may perform both of the rotation speed correction and the drive force correction together. In this case, the control device 10 sets the final target engine rotation speed so that fuel consumption becomes better than when the engine 4 is driven at the reference target engine rotation speed N1, and sets the target throttle opening so that engine power higher or lower than the engine power at the driving point P1 can be obtained, while driving the engine 4 at the final target engine rotation speed. For example, referring to Fig. 3(b), if the control device 10 intends to obtain the engine power indicated by the line L4, the control device sets a final target engine rotation speed N6 between a best fuel consumption engine rotation speed N5 indicated by the line L4 and the reference target engine rotation speed N1. In addition, the control device 10 sets a throttle opening Th6 at a driving point P6 as the target throttle opening so that the engine power indicated by the line L4 can be obtained, while driving the engine 4 at the final target engine rotation speed N6. The best fuel consumption engine rotation speed N5 is an engine rotation speed at the driving point P5 which is an intersection between the line L4 and an optimum efficiency driving line A. Further, the driving point P6 is a driving point on the line L4 corresponding to the engine rotation speed N6.

[In Case Where Neither of Rotation Speed Correction and Drive Force Correction are Performed]

In a case where neither of the rotation speed correction and the drive force correction are performed, the control device 10 sets the reference target engine rotation speed N1 as the final target engine rotation speed, and sets the target throttle opening so that the engine power at the driving point P1 can be obtained. Therefore, in this case, the throttle opening Th1 at the driving point P1 is set as the target throttle opening.

Fig. 4 is a block diagram illustrating a process performed by the control device 10. As illustrated in Fig. 4, the control device 10 includes a vehicle speed control unit 11, a target engine rotation speed calculation unit 12, a target transmission ratio calculation unit 13, a reference throttle opening calculation unit 14, a target drive force calculation unit 15, and a target throttle opening calculation unit 16. The control device 10 performs a series of processes at predetermined cycles, and a target transmission ratio of the CVT 5 and a target throttle opening are updated at the cycles.

In a case where the vehicle speed control mode is selected, the vehicle speed control unit 11 calculates the above-described vehicle speed difference cancel value corresponding to a difference between the actual vehicle speed and the vehicle speed which is a target (hereinafter, referred to as a target vehicle speed). In addition, the vehicle speed control unit 11 of this example outputs the accelerator operation amount detected by the sensor in a case where the normal traveling mode is selected.

The vehicle speed control unit 11 calculates the vehicle speed difference cancel value on the basis of a difference between a value related to vehicle speed detected via a sensor and a target value of the value. The value related to vehicle speed is a vehicle speed calculated by using, for example, rotation speed of the front wheel 2 or rotation speed of the rear wheel 8. Alternatively, the value related to vehicle speed may be a rotation speed of the member located following the output shaft of the CVT 5 in the torque transmission path, such as a rotation speed of the rear wheel 8, a rotation speed of the output shaft of the CVT 5, a rotation speed of the member of the final deceleration mechanism 7, or a rotation speed of the member of the clutch 6. In other words, the value related to vehicle speed is a value which can be converted into vehicle speed by being multiplied by a coefficient or a deceleration ratio. Rotation speed of the output shaft of the CVT 5 can be converted into vehicle speed in a state in which the clutch 6 is engaged therewith. In the present explanation, vehicle speed detected via the vehicle speed sensor 27 will be described as the value related to vehicle speed. The vehicle speed control unit 11 calculates the vehicle speed difference cancel value on the basis of the actual vehicle speed detected via the vehicle speed sensor 27 and the target vehicle speed.

In order that the actual vehicle speed matches the target vehicle speed, the vehicle speed control unit 11 calculates the vehicle speed difference cancel value on the basis of a difference (hereinafter, referred to as a vehicle speed difference) between the actual vehicle speed and the target vehicle speed. The vehicle speed difference cancel value is a value proportional to, for example, vehicle speed difference. In addition, the vehicle speed difference cancel value may be a value proportional to a value obtained by differentiating the vehicle speed difference by time, a value obtained by integrating the vehicle speed difference by time, and the vehicle speed difference. In other words, the vehicle speed control unit 11 may calculate the vehicle speed difference cancel value by executing, for example, proportional integral derivative (PID) control on the vehicle speed. The vehicle speed difference cancel value is used instead of the accelerator operation amount in the process performed by the target engine rotation speed calculation unit 12 in a case where the vehicle speed control mode is selected. Therefore, the vehicle speed difference cancel value is a numerical value which can replace the accelerator operation amount. In a case where accelerator operation amount changes from 0% to 100%, the vehicle speed control unit 11 calculates the vehicle speed difference cancel value, for example, between 0 and 100.

In addition, the vehicle speed control unit 11 sets a target vehicle speed. The target vehicle speed is set on the basis of a signal from the vehicle speed control switch 28 provided in the motorcycle 1. For example, when the switch in the vehicle speed control switch 28 for outputting an instruction for selecting the vehicle speed control mode is turned on, the vehicle speed control unit 11 sets, as the target vehicle speed, an actual vehicle speed detected at the time when the switch is turned on. In addition, the vehicle speed control unit 11 starts to calculate the vehicle speed difference cancel value. As a result, the control mode transfers from the normal traveling mode to the vehicle speed control mode. When the switch for outputting an instruction for increasing a speed is turned on, the vehicle speed control unit 11 increases the target vehicle speed by a predefined speed. Further, when the switch for outputting an instruction for decreasing a speed is turned on, the vehicle speed control unit 11 decreases the target vehicle speed by a predefined speed. Still further, the vehicle speed control unit 11 stops the calculation of the vehicle speed difference cancel value when the switch for outputting an instruction for selecting the vehicle speed control mode is turned off, or when the operation member for activating the brake device is operated, and restarts outputting of the accelerator operation amount detected by the sensor. As a result, the control mode transfers from the vehicle speed control mode to the normal traveling mode.

As illustrated in Fig. 4, the vehicle speed control unit 11 is provided on the upstream side of the target engine rotation speed calculation unit 12 in the process flow. In other words, the target engine rotation speed calculation unit 12 uses the vehicle speed difference cancel value calculated by the vehicle speed control unit 11. Consequently, the above-described rotation speed correction, that is, the rotation speed correction in a correction portion 12B to be described later can also be performed in the vehicle speed control mode. In addition, even in a case where an accelerator operation amount changes in the vehicle speed control mode, it is possible to prevent a target engine rotation speed from changing due to the change in the accelerator operation amount. The vehicle speed control unit 11 is provided on the upstream side of the target drive force calculation unit 15 in the process flow. In other words, the target drive force calculation unit 15 uses the vehicle speed difference cancel value calculated by the vehicle speed control unit 11. For this reason, the above-described drive force correction, that is, the drive force correction in a correction portion 15B to be described later can also be performed in the vehicle speed control mode.

The target engine rotation speed calculation unit 12 calculates the target engine rotation speed on the basis of the output value of the vehicle speed control unit 11. In other words, the target engine rotation speed calculation unit 12 calculates the target engine rotation speed on the basis of the accelerator operation amount detected by the sensor in the normal traveling mode, and calculates the target engine rotation speed on the basis of the vehicle speed difference cancel value in the vehicle speed control mode. As illustrated in Fig. 4, the target engine rotation speed calculation unit 12 includes a reference target engine rotation speed calculation portion 12A and the correction portion 12B.

The reference target engine rotation speed calculation portion 12A calculates the reference target engine rotation speed (N1 in the example illustrated in Fig. 3) on the basis of the output value of the vehicle speed control unit 11. In other words, the reference target engine rotation speed calculation unit 12A calculates the reference target engine rotation speed on the basis of the accelerator operation amount detected by the sensor in the normal traveling mode, and calculates the reference target engine rotation speed on the basis of the vehicle speed difference cancel value in the vehicle speed control mode.

The storage device 10c stores basic information (for example, a map) which associates engine rotation speed, accelerator operation amount, and value related to vehicle speed with each other. In the present explanation, the value related to vehicle speed is a value which can be converted into a vehicle speed by being multiplied by the vehicle speed, a coefficient, or a deceleration ratio as described above. In the normal traveling mode, the reference target engine rotation speed calculation portion 12A refers to the basic information, and calculates an engine rotation speed corresponding to the accelerator operation amount output from the vehicle speed control unit 11 and the value related to a vehicle speed detected by the sensor, as the reference target engine rotation speed. In the vehicle speed control mode, the reference target engine rotation speed calculation portion 12A uses the vehicle speed difference cancel value output from the vehicle speed control unit 11 instead of the accelerator operation amount, refers to the basic information, and calculates, as the reference target engine rotation speed, the engine rotation speed corresponding to the vehicle speed difference cancel value and the value related to vehicle speed detected by the sensor.

The basic information is a map (hereinafter, referred to as an engine rotation speed map) which associates, for example, engine rotation speed, accelerator operation amount, and value related to vehicle speed with each other. Fig. 5 is a diagram illustrating an example of the engine rotation speed map. In the drawing, a transverse axis expresses vehicle speed, and a longitudinal axis expresses engine rotation speed. In the drawing, a plurality of lines indicating a relationship between engine rotation speed and vehicle speed are exemplified. These lines respectively indicate relationships between engine rotation speed and vehicle speed at accelerator operation amounts Ac1, Ac2 and Ac3. Further, a line "Low" of the same drawings indicates a relationship between vehicle speed and engine rotation speed in a case where transmission ratio is set to be "LOW", and a line "High" indicates a relationship between vehicle speed and engine rotation speed in a case where transmission ratio is set to be "TOP".

In the normal traveling mode, for example, in a case where the accelerator operation amount is Ac1, and the vehicle speed is V1, the reference target engine rotation speed calculation portion 12A calculates, as the reference target engine rotation speed, an engine rotation speed Ne1 corresponding to the accelerator operation amount Ac1 and the vehicle speed V1. In the vehicle speed control mode, for example, in a case where the vehicle speed difference cancel value is Ac2, and the vehicle speed is V1, the vehicle speed difference cancel value Ac2 is used as the accelerator operation amount, and an engine rotation speed Ne2 corresponding to the vehicle speed V1 and the vehicle speed difference cancel value Ac2 is calculated as the reference target engine rotation speed.

The correction portion 12B calculates the final target engine rotation speed on the basis of the reference target engine rotation speed. Specifically, in a case where the rotation speed correction is performed, the correction portion 12B corrects the reference target engine rotation speed and sets the correction result as the final target engine rotation speed (N2 in the example illustrated in Fig. 3). As described above, for example, the correction portion 12B calculates the final target engine rotation speed on the basis of the reference target engine rotation speed so that fuel consumption becomes better than when the engine 4 is driven at the reference target engine rotation speed. The correction portion 12B sets the reference target engine rotation speed as the final target engine rotation speed in a case where the rotation speed correction is not performed.

The rotation speed correction can be implemented by various methods. For example, the correction portion 12B causes the final target engine rotation speed to gradually reach the best fuel consumption engine rotation speed from the reference target engine rotation speed. For example, when a difference between the final target engine rotation speed and the reference target engine rotation speed is denoted by a correction amount $\Delta N$ (the final target engine rotation speed = the reference target engine rotation speed + the correction amount $\Delta N$), the correction amount is gradually changed so that the final target engine rotation speed gradually reaches the best fuel consumption engine rotation speed.

The correction amount can be gradually changed, for example, by repeatedly performing a process of adding a predefined value to a correction amount calculated in the previous process or a process of subtracting a predefined value from a correction amount calculated in the previous process. As another example, the correction portion 12B may integrate, by time, the difference between the reference target engine rotation speed and the best fuel consumption engine rotation speed, and may calculate a correction amount on the basis of the integrated value. As still another example, a filter expressed by a transfer function with a great time constant may be used to calculate a correction amount. In this case of using the filter, the gradual change of the correction amount can be realized. When the correction amount is gradually changed as described above, change in the correction amount is small. As a result, for example, in a case where the reference target engine rotation speed changes due to a change in an accelerator operation amount, the final target engine rotation speed also changes by an amount corresponding to the change in the reference target engine rotation speed.

The target transmission ratio calculation unit 13 calculates the target transmission ratio so that the actual engine rotation speed reaches the final target engine rotation speed. In other words, the target transmission ratio calculation unit 13 calculates the target transmission ratio on the basis of the final target engine rotation speed and a rotation speed of the mechanism located further toward the downstream side than the CVT 5. As an example, the target transmission ratio calculation unit 13 calculates the target transmission ratio on the basis of the final target engine rotation speed and the vehicle speed detected by the vehicle speed sensor 27. For example, the target transmission ratio calculation unit 13 calculates the target transmission ratio on the basis of a value obtained by dividing the final target engine rotation speed by the vehicle speed, and the deceleration ratio in the final deceleration mechanism 7. In a case where the transmission ratio calculated in this way exceeds an upper limit or a lower limit of a transmission ratio of the CVT 5, the target transmission ratio calculation unit 13 sets the upper limit or the lower limit as the target transmission ratio. The control device 10 drives the CVT actuator 25 so that an actual transmission ratio matches the target transmission ratio.

The reference throttle opening calculation unit 14 converts the output value of the vehicle speed control unit 11 into a throttle opening (an angle of the throttle valve) by using a map or a relational expression which is stored in the storage device 10c in advance, and sets the result thereof as a reference throttle opening. In other words, in the normal traveling mode, the reference throttle opening calculation unit 14 converts the accelerator operation amount detected by the sensor into a throttle opening (an angle of the throttle valve), and sets the result thereof as the reference throttle opening. In the vehicle speed control mode, the reference throttle opening calculation unit 14 converts the vehicle speed difference cancel value into the throttle opening, and sets the result thereof as the reference throttle opening.

As illustrated in Fig. 4, the target drive force calculation unit 15 includes a reference target drive force calculation portion 15A and the correction portion 15B. The reference target drive force calculation portion 15A calculates a target value (the above-described reference target drive force) related to drive force of the vehicle on the basis of the reference throttle opening and the target engine rotation speed (specifically, the reference target engine rotation speed). In other words, the reference target drive force calculation portion 15A calculates the reference target drive force on the basis of the accelerator operation amount and the reference target engine rotation speed in the normal traveling mode. The reference target drive force calculation portion 15A calculates the reference target drive force on the basis of the vehicle speed difference cancel value and the reference target engine rotation speed in the vehicle speed control mode. Referring to Fig. 3, the reference target drive force calculation portion 15A calculates the drive force at the driving point P1 and sets the drive force as the reference target drive force.

A process in the reference target drive force calculation portion 15A is performed as follows, for example. An engine torque map which correlates engine rotation speed, throttle opening, and engine torque with each other is stored in the storage device 10c in advance. The reference target drive force calculation portion 15A calculates engine torque (this engine torque is referred to as reference engine torque) corresponding to the reference target engine rotation speed and the reference throttle opening on the basis of the engine torque map. In addition, the reference target drive force calculation portion 15A may use a map which correlates engine rotation speed, throttle opening, and engine power with each other instead of the engine torque map, and may calculate engine power (this engine power is referred to as a reference target engine power) corresponding to the reference target engine rotation speed and the reference throttle opening by using the map.

In a case where a target value for torque of the rear wheel 8 is defined as the reference target drive force, the reference target drive force calculation portion 15A converts the reference engine torque into torque of the rear wheel 8 and sets the result thereof as the reference target drive force. For example, the reference target drive force calculation portion 15A calculates inertial torque of the engine 4 on the basis of a change speed of the reference target engine rotation speed. Thereafter, the inertial torque is subtracted from the reference engine torque (the reference engine torque - the inertial torque). In a case where the reference target drive force is defined as target value for power (torque of the rear wheel 8 × rotation speed of the rear wheel 8) of the rear wheel 8, the reference target drive force calculation portion 15A converts a reference engine power into power of the rear wheel 8, and sets the result thereof as the reference target drive force. For example, the reference target drive force calculation portion 15A may subtract, from the reference engine power, an change in power caused by the inertial torque(the reference engine power - the change in power caused by the inertial torque) . Further, the subtraction result is set as the reference target drive force. Alternatively, the subtraction of the inertial torque or the subtraction of the change in power caused by the inertial torque may not necessarily be performed.

Furthermore, the reference target drive force calculation portion 15A may subtract a torque which is lost in the CVT 5 or subtract a loss of power caused by the lost torque. The subtraction result may be set as the reference target drive force. The torque lost in the CVT 5 is caused by, for example, torque which is lost in order to rotate the belt. The torque lost in the CVT 5 may be calculated on the basis of a rotation speed of the output shaft of the CVT 5 and an engine torque.

In a case where the drive force correction is performed, the correction portion 15B sets a value obtained by correcting the reference target drive force as the target drive force which is a final target value. On the other hand, in a case where the drive force correction is not performed, the correction portion 15B sets the reference target drive force as the target drive force. In a case where the drive force correction is performed, the correction portion 15B adds a correction value to the reference target drive force or multiplies a correction value by the reference target drive force, and sets the calculation result as the target drive force.

As an example of the correction, in a case where the vehicle is traveling on an uphill road, the correction portion 15B calculates a traveling load applied to the vehicle, and adds a correction value corresponding to the traveling load to the reference target drive force or multiplies a correction value corresponding to the traveling load by the reference target drive force. The traveling load may be calculated as follows, for example. In a case where acceleration of the vehicle is denoted by "a", weight of the vehicle is denoted by "M", engine torque is denoted by "Teg", inertial torque of the engine 4 is denoted by "Ti", mechanical loss of torque on the path from the CVT 5 to the rear wheel 8 is denoted by "Tloss", and the entire traveling load applied to the vehicle is denoted by "Lv", these parameters substantially have the following relationship. In addition, the entire traveling load "Lv" includes traveling resistance (hereinafter, referred to as reference traveling resistance) such as air resistance when the vehicle travels on a flat road.

$$(Teg-Ti)\times Transmission\ ratio-Tloss=(M\times a+Lv)\times k$$

The engine torque "Teg" is calculated by referring to the engine torque map indicating a relationship between throttle opening, engine rotation speed, and engine torque. The inertial torque "Ti" is a value obtained by multiplying change speed of engine rotation speed by inertial moment of a mechanism (the crank shaft or the piston of the engine 4) located further toward the upstream side than the CVT 5. "Transmission ratio" is, for example, the present actual transmission ratio of the CVT 5, and may be calculated by using the actual engine rotation speed and vehicle speed detected by the sensors. In addition, "k" is a coefficient obtained by using a radius of the rear wheel 8 or a deceleration ratio of the final deceleration mechanism 7. Therefore, the correction portion 15B calculates the engine torque "Teg" on the basis of, for example, an engine rotation speed and a throttle opening. Then, the correction portion 15B calculates the entire traveling load "Lv" from the above-described relation on the basis of the engine torque "Teg", a change speed of an engine rotation speed, and a vehicle speed. The correction portion 15B calculates, as the traveling load, a value obtained by subtracting the reference traveling resistance caused by air resistance or the like from the entire traveling load "Lv". The storage device 10c stores information (for example, a map) which associates traveling load with correction amount. The correction portion 15B calculates a correction amount corresponding to a calculated traveling load by referring to the information. The reference traveling resistance increases as vehicle speed increases. A relationship between the vehicle speed and the reference traveling resistance may be obtained in advance through an experimentation or the like. Thus, the reference traveling resistance is calculated on the basis of a vehicle speed by referring to, for example, a map or a relational expression in which vehicle speed is correlated with reference traveling resistance.

As another example of the correction, in a case where the reference target drive force increases, that is, in a case where the vehicle is accelerated, the correction portion 15B makes the target drive force greater than the reference target drive force, or makes increase speed of the target drive force slower than an increase speed of the reference target drive force. In addition, in a case where the reference target drive force increases and then decreases, the correction portion 15B may make decrease speed of the target drive force slower than a decrease speed of the reference target drive force. Such a correction to the target drive force can be realized by applying, for example, a filter expressed by a transfer function including a proportional element or a primary delay element, to the reference target drive force. Since this correction is performed, it is possible to improve a sense of acceleration of the vehicle.

The target throttle opening calculation unit 16 calculates a target throttle opening on the basis of the target drive force and the final target engine rotation speed so that the actual drive force matches the target drive force, while driving the engine 4 at the final target engine rotation speed. The control device 10 drives the throttle actuator 23 so that the actual throttle opening matches the target throttle opening. The target throttle opening calculation unit 16 of the present example includes a target engine torque calculation portion 16A and a throttle opening calculation portion 16B.

The target engine torque calculation portion 16A converts the target drive force into a target for engine torque (that is, target engine torque) by using the final target engine rotation speed. In other words, the target engine torque calculation portion 16A calculates engine torque which causes the target drive force to be obtained while driving the engine 4 at a final target engine rotation speed, and sets the calculated engine torque as the target engine torque. The throttle opening calculation portion 16B calculates the target throttle opening on the basis of the target engine torque and the final target engine rotation speed.

The target engine torque calculation portion 16A calculates inertial torque of the engine 4 on the basis of, for example, the change speed of final target engine rotation speed, and converts the target drive force into the target engine torque on the basis of the inertial torque, torque lost in the CVT 5, and the final target engine rotation speed. Specifically, in a case where the target drive force is defined as a target value for torque of the rear wheel 8, in contrast to the reference target drive force calculation portion 15A, the target engine torque calculation portion 16A adds the inertial torque and the torque lost in the CVT 5 to the target drive force and sets the result thereof as the target engine torque. In a case where the target drive force is defined as a target value for power of the rear wheel 8, in contrast to the reference target drive force calculation portion 15A, the target engine torque calculation portion 16A adds, for example, a change of power caused by the inertial torque and a loss of power caused by the torque lost in the CVT 5 to the target drive force. Then, the target engine torque calculation portion 16A calculates the target engine torque on the basis of the addition result (a target engine power) and the final target engine rotation speed.

The throttle opening calculation portion 16B calculates the target throttle opening on the basis of the target engine torque. Specifically, the throttle opening calculation portion 16B refers to a map which correlates engine torque, throttle opening, and engine rotation speed with each other, calculates the throttle opening corresponding to the target engine torque and the final target engine rotation speed, and sets the throttle opening as the target throttle opening.

The process performed by the target throttle opening calculation unit 16 is not limited to the above description. For example, the storage device 10c stores a map which correlates engine power, throttle opening, and engine rotation speed with each other. In this case, the target throttle opening calculation unit 16 converts the target drive force into the target engine power. Then, the target throttle opening may be calculated on the basis of the target engine power and the final target engine rotation speed by referring to this map.

As described above, as an example, in a case where the rotation speed correction is performed, the target engine rotation speed calculation unit 12 calculates the final target engine rotation speed on the basis of the best fuel consumption engine rotation speed and the reference target engine rotation speed. The best fuel consumption engine rotation speed is calculated on the basis of the target drive force. For example, the storage device 10c stores a relationship (that is, a map which defines the best fuel consumption curve) between power of the rear wheel 8 and the best fuel consumption engine rotation speed. The target engine rotation speed calculation unit 12 refers to the map, and calculates the best fuel consumption engine rotation speed corresponding to the target drive force. In a case where the target drive force is defined as a target value for torque of the rear wheel 8, the target engine rotation speed calculation unit 12 multiplies, for example, a rotation speed of the rear wheel 8 by the target drive force, and calculates the best fuel consumption engine rotation speed corresponding to the multiplication result (the target value for power of the rear wheel 8).

(1) In the above-described control device 10, the target engine rotation speed calculation unit 12 calculates the target engine rotation speed (that is, the reference target engine rotation speed and the final target engine rotation speed), and the target transmission ratio calculation unit 13 calculates the target transmission ratio of the CVT 5 on the basis of the target engine rotation speed (the final target engine rotation speed). The target drive force calculation unit 15 calculates the target value (that is, the reference target drive force and the target drive force) related to drive force of the vehicle on the basis of the accelerator operation amount detected by the sensor and the target engine rotation speed (the reference target engine rotation speed). The target throttle opening calculation unit 16 calculates the target throttle opening on the basis of the target value related to drive force and the target engine rotation speed (the final target engine rotation speed) so that a drive force corresponding to the target value can be obtained in a case where the normal traveling mode is selected. In addition, the target throttle opening calculation unit 16 calculates the target throttle opening so that the actual vehicle speed ultimately matches the target vehicle speed in a case where the vehicle speed control mode is selected. According to the control device 10, it is possible to reduce the influence to the target engine rotation speed of the target value related to drive force of a vehicle. As a result, it becomes easier to control the engine rotation speed so that a comfortable riding feeling can be obtained. Further, if the vehicle speed control mode is selected, the actual vehicle speed can be caused to match the target vehicle speed.

(2) The vehicle speed control unit 11 calculates the vehicle speed difference cancel value which is a value corresponding to a difference between the actual vehicle speed and the target vehicle speed. The target engine rotation speed calculation unit 12 calculates the target engine rotation speed (that is, the reference target engine rotation speed and the final target engine rotation speed) on the basis of the accelerator operation amount detected by the sensor in a case where the normal traveling mode is selected. The target engine rotation speed calculation unit 12 calculates the target engine rotation speed (that is, the reference target engine rotation speed and the final target engine rotation speed) on the basis of the vehicle speed difference cancel value instead of the accelerator operation amount in a case where the vehicle speed control mode is selected. Therefore, since the vehicle speed difference cancel value is used instead of the accelerator operation amount in the vehicle speed control mode, the engine rotation speed does not change even if the accelerator operation amount changes. For this reason, it is possible to reduce a change in drive force due to the change in the engine rotation speed and thus to stabilize the vehicle speed.

(3) The target drive force calculation unit 15 calculates the target value related to drive force of the vehicle on the basis of the accelerator operation amount detected by the sensor and the target engine rotation speed (the reference target engine rotation speed) in a case where the normal traveling mode is selected. The target drive force calculation unit 15 calculates the target value related to drive force of the vehicle on the basis of the target engine rotation speed (the reference target engine rotation speed) and the vehicle speed difference cancel value instead of the accelerator operation amount in a case where the vehicle speed control mode is selected. The target throttle opening calculation unit 16 calculates the target throttle opening on the basis of the target value related to drive force which is calculated by using the vehicle speed difference cancel value, and the target engine rotation rotation speed, so that the actual vehicle speed matches the target vehicle speed in a case where the vehicle speed control mode is selected. Therefore, in the vehicle speed control mode, the vehicle speed difference cancel value is used instead of the accelerator operation amount in both of calculation for the target value related to drive force and calculation for the target engine rotation speed. As a result, in the vehicle speed control mode, since the influences of the change in the accelerator operation amount to the target value related to drive force and the target engine rotation speed are reduced, it is possible to easily perform control in the vehicle speed control mode.

(4) The target engine rotation speed calculation unit 12 corrects the target engine rotation speed (that is, the reference target engine rotation speed) in a case where the normal traveling mode is selected and in a case where the vehicle speed control mode is selected. Therefore, the target engine rotation speed can be corrected in both of the normal traveling mode and the vehicle speed control mode.

(6) The target drive force calculation unit 15 calculates the target value related to drive force of the vehicle on the basis of the accelerator operation amount detected by the sensor and the target engine rotation speed before being corrected (that is, the reference target engine rotation speed) in a case where the normal traveling mode is selected. The target throttle opening calculation unit 16 calculates the target throttle opening on the basis of the corrected target engine rotation speed (that is, the final target engine rotation speed) and the target value related to drive force of the vehicle. Therefore, the vehicle can be driven with the drive force which is calculated on the basis of the engine rotation speed before being corrected and the accelerator operation amount while the engine is driven at the corrected target engine rotation speed. The target drive force calculation unit 15 calculates the target value related to drive force of the vehicle on the basis of the vehicle speed difference cancel value and the target engine rotation speed before being corrected (that is, the reference target engine rotation speed) in a case where the vehicle speed control mode is selected. The target throttle opening calculation unit 16 calculates the target throttle opening on the basis of the corrected target engine rotation speed (that is, the final target engine rotation speed) and the target value related to drive force of the vehicle. Therefore, the vehicle can be driven with a drive force which is calculated on the basis of the engine rotation speed before being corrected and the vehicle speed difference cancel value while the engine is driven at the corrected target engine rotation speed.

(6) The target drive force calculation unit 15 corrects the target value related to drive force of the vehicle in a case where the normal traveling mode is selected and in a case where the vehicle speed control mode is selected. Therefore, the target value related to drive force can be corrected in both of the normal traveling mode and the vehicle speed control mode.

Fig. 6 is a block diagram illustrating a process performed by a control device according to another embodiment of the present invention. The control device illustrated in Fig. 6 includes a vehicle speed control unit 115C in the target drive force calculation unit 15 instead of the above-described vehicle speed control unit 11.

The vehicle speed control unit 115C calculates a vehicle speed difference cancel value in the vehicle speed control mode. The vehicle speed difference cancel value calculated by the vehicle speed control unit 115C is a numerical value which can be replaced with the target drive force. In other words, in the normal traveling mode, the vehicle speed control unit 115C outputs a target drive force which is calculated through the process in the correction portion 15B. In the vehicle speed control mode, the vehicle speed control unit 115C outputs, as a target drive force, the vehicle speed difference cancel value instead of the target drive force which is calculated through the process in the correction portion 15B. Therefore, the target throttle opening calculation unit 16 calculates the target throttle opening on the basis of the vehicle speed difference cancel value which is calculated as the target drive force in the vehicle speed control mode. Specifically, the target throttle opening calculation unit 16 converts the vehicle speed difference cancel value calculated as the target drive force into a target engine torque or a target engine power, and calculates the target throttle opening on the basis of the target engine torque or the target engine power which is the conversion result, and a final target engine rotation speed.

The calculation of the vehicle speed difference cancel value in the vehicle speed control unit 115C may be performed in the same manner as the calculation of the vehicle speed difference cancel value in the vehicle speed control unit 11. For example, in order that the actual vehicle speed detected via the sensor matches the target vehicle speed, the vehicle speed control unit 115C calculates the vehicle speed difference cancel value on the basis of the difference between the actual vehicle speed and the target vehicle speed (hereinafter, referred to as a vehicle speed difference). For example, the vehicle speed control unit 115C calculates the vehicle speed difference cancel value by executing PID control on a vehicle speed.

Fig. 7 is a block diagram illustrating a process performed by a control device according to still another embodiment of the present invention. The control device illustrated in Fig. 7 includes a vehicle speed control unit 116C in the target throttle opening calculation unit 16 instead of the above-described vehicle speed control units 11 and 115C.

The vehicle speed control unit 116C calculates a vehicle speed difference cancel value in the vehicle speed control mode. The vehicle speed difference cancel value calculated by the vehicle speed control unit 116C is a numerical value which can be replaced with the target throttle opening calculated by the throttle opening calculation portion 16B. In other words, in the normal traveling mode, the vehicle speed control unit 116C outputs the target throttle opening which is calculated through the process in the throttle opening calculation portion 16B. In the vehicle speed control mode, the vehicle speed control unit 116C outputs the vehicle speed difference cancel value as the target throttle opening. In the vehicle speed control mode, the control device drives the throttle actuator 23 so that the actual throttle opening matches the vehicle speed difference cancel value which is output as the target throttle opening.

The calculation of the vehicle speed difference cancel value in the vehicle speed control unit 116C may be performed in the same manner as the calculation of the vehicle speed difference cancel value in the vehicle speed control units 11 and 115C. In other words, in order that the actual vehicle speed detected via the sensor matches the target vehicle speed, the vehicle speed control unit 116C calculates the vehicle speed difference cancel value on the basis of the difference between the actual vehicle speed and the target vehicle speed (hereinafter, referred to as a vehicle speed difference). For example, the vehicle speed control unit 116C calculates the vehicle speed difference cancel value by executing PID control on a vehicle speed.

In addition, the present invention is not limited to the above-described embodiment, and may have various modifications.

The control device 10 can perform both of the rotation speed correction and the drive force correction. However, the control device 10 may perform either the rotation speed correction or the drive force correction. Still further, the control device 10 may perform neither the rotation speed correction nor the drive force correction. In other words, the target drive force calculation unit 15 may not necessarily include the correction portion 15B. Furthermore, the target engine rotation speed calculation unit 12 may not necessarily include the correction portion 12B.

Moreover, in the above description, the target drive force and the reference target drive force are a target power of the rear wheel 8 or target torque of the rear wheel 8. However, the drive forces may be a target engine power, and may be target engine torque.

In addition, in the above description, a target engine rotation speed output by the correction portion 12B is referred to as a final target engine rotation speed, but the final target engine rotation speed may be further corrected, and a target transmission ratio or the like may be calculated on the basis of the corrected target engine rotation speed.

## Claims

1. A control device of a vehicle, which controls a transmission ratio of a continuously variable transmission and a throttle opening and in which a normal traveling mode and a vehicle speed control mode are selectable as a control mode, the control device comprising:

   a target engine rotation speed calculation unit that calculates a target engine rotation speed;
   a target transmission ratio calculation unit that calculates a target transmission ratio of the continuously variable transmission on the basis of the target engine rotation speed;
   a target drive force calculation unit that calculates a target value related to drive force of the vehicle on the basis of an accelerator operation amount detected by a sensor and the target engine rotation speed; and
   a target throttle opening calculation unit that calculates a target throttle opening on the basis of the target value related to drive force of the vehicle and the target engine rotation speed so that a drive force corresponding to the target value can be obtained in a case where the normal traveling mode is selected, and calculates a target throttle opening so that an actual vehicle speed matches a target vehicle speed in a case where the vehicle speed control mode is selected.

2. The control device of a vehicle according to claim 1, further comprising:

   a vehicle speed control unit that calculates a vehicle speed difference cancel value which is a value corresponding to a difference between the actual vehicle speed and the target vehicle speed,
   wherein the target engine rotation speed calculation unit calculates the target engine rotation speed on the basis of an accelerator operation amount detected by the sensor in a case where the normal traveling mode is selected, and calculates the target engine rotation speed on the basis of the vehicle speed difference cancel value instead of the accelerator operation amount in a case where the vehicle speed control mode is selected.

3. The control device of a vehicle according to claim 2,
   wherein the target drive force calculation unit calculates the target value related to drive force of the vehicle on the basis of an accelerator operation amount detected by the sensor and the target engine rotation speed in a case where the normal traveling mode is selected, and calculates the target value related to drive force of the vehicle on the basis of the vehicle speed difference cancel value instead of the accelerator operation amount and the target engine rotation speed in a case where the vehicle speed control mode is selected, and
   wherein the target throttle opening calculation unit calculates the target throttle opening on the basis of the target value related to drive force of the vehicle which is calculated by using the vehicle speed difference cancel value and the target engine rotation speed, so that the actual vehicle speed matches the target vehicle speed in a case where the vehicle speed control mode is selected.

4. The control device of a vehicle according to claim 2 or 3,
   wherein the target engine rotation speed calculation unit corrects the target engine rotation speed in a case where the normal traveling mode is selected and in a case where the vehicle speed control mode is selected.

**5.** The control device of a vehicle according to claim 4,
wherein the target drive force calculation unit calculates the target value related to drive force of the vehicle on the basis of an accelerator operation amount detected by the sensor and the target engine rotation speed before being corrected in a case where the normal traveling mode is selected, and calculates the target value related to drive force of the vehicle on the basis of the vehicle speed difference cancel value and the target engine rotation speed before being corrected in a case where the vehicle speed control mode is selected, and
wherein the target throttle opening calculation unit calculates the target throttle opening on the basis of the target engine rotation speed after being corrected and the target value related to drive force of the vehicle.

**6.** The control device of a vehicle according to claim 3,
wherein the target drive force calculation unit corrects the target value related to drive force of the vehicle in a case where the normal traveling mode is selected and in a case where the vehicle speed control mode is selected.

**7.** A motorcycle comprising the control device according to any one of claims 1 to 6.

FIG.1

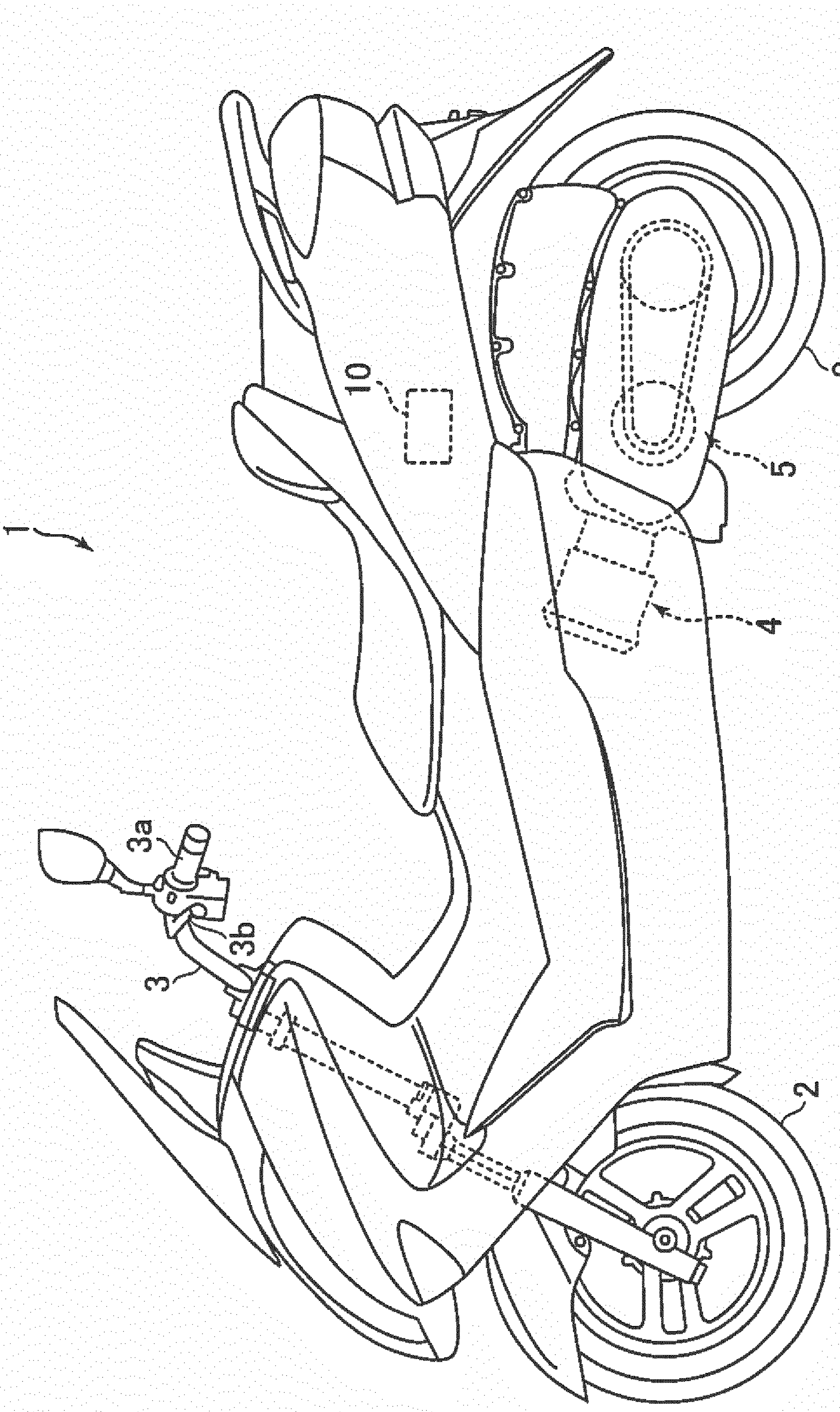

FIG.2

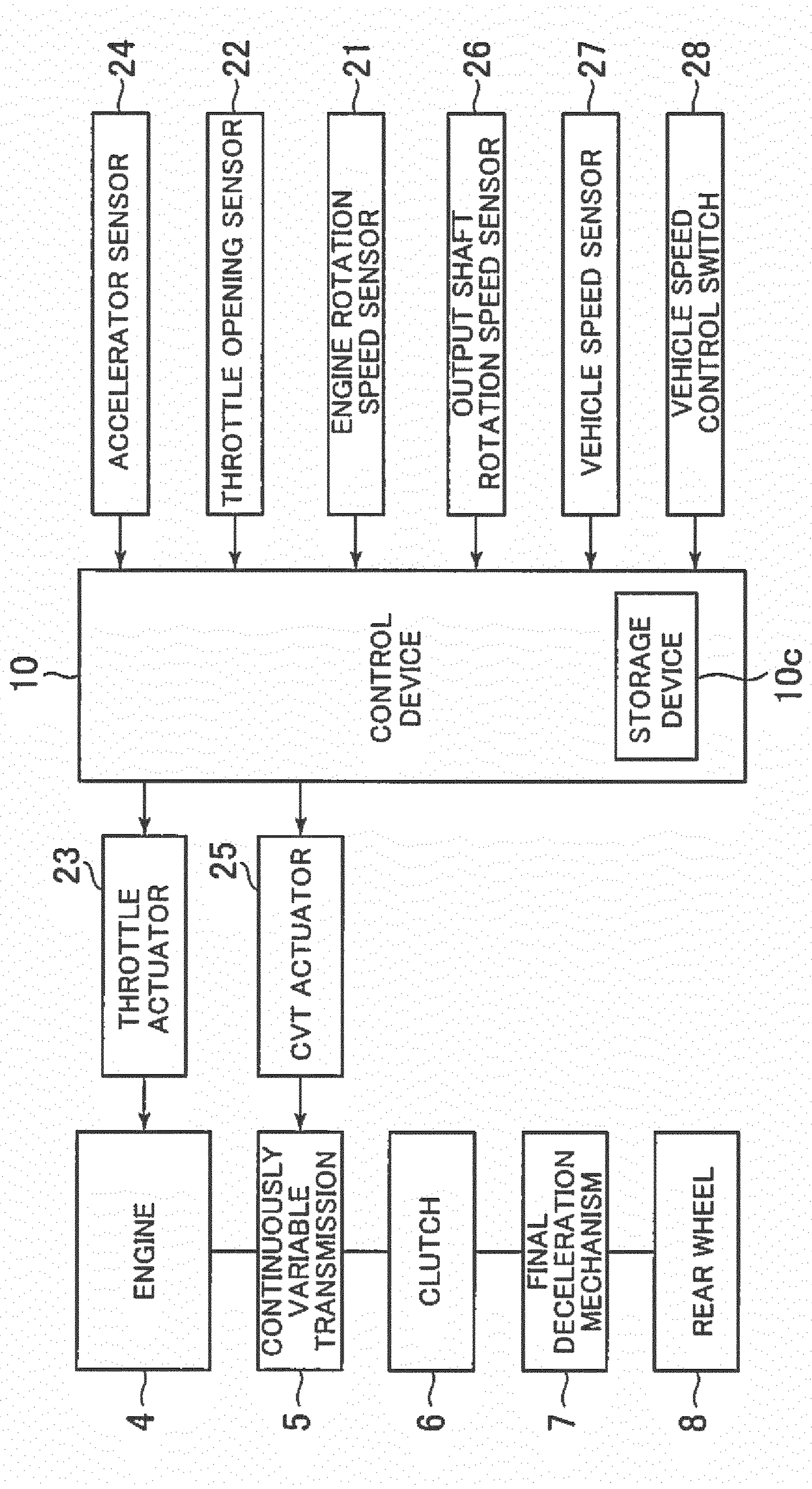
ACCELERATOR SENSOR
24
THROTTLE OPENING SENSOR
22
ENGINE ROTATION SPEED SENSOR
21
OUTPUT SHAFT ROTATION SPEED SENSOR
26
VEHICLE SPEED SENSOR
27
VEHICLE SPEED CONTROL SWITCH
28
CONTROL DEVICE
10
STORAGE DEVICE
10c
THROTTLE ACTUATOR
23
CVT ACTUATOR
25
ENGINE
4
CONTINUOUSLY VARIABLE TRANSMISSION
5
CLUTCH
6
FINAL DECELERATION MECHANISM
7
REAR WHEEL
8

FIG.3

(a)

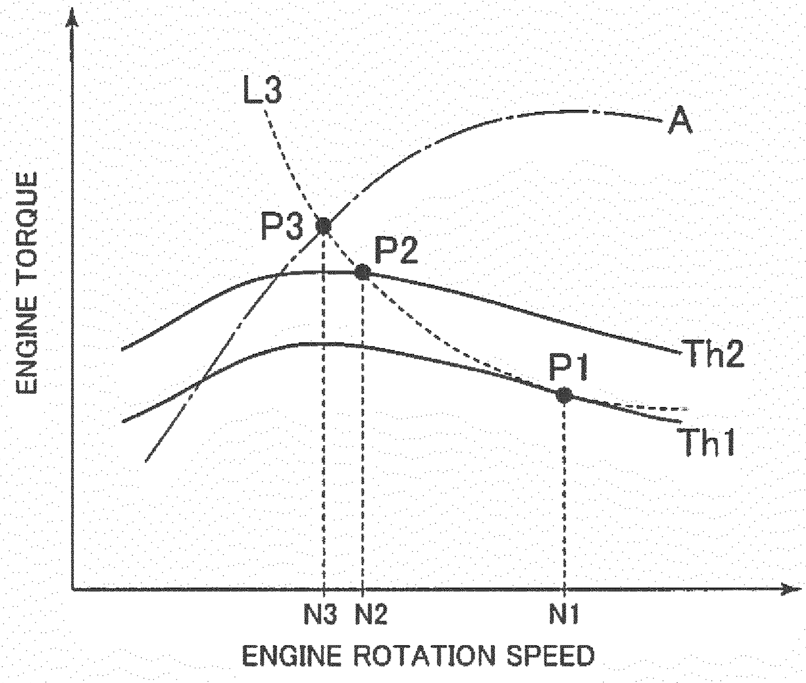
ENGINE TORQUE
L3
A
P3
P2
Th2
P1
Th1
N3
N2
N1
ENGINE ROTATION SPEED

(b)

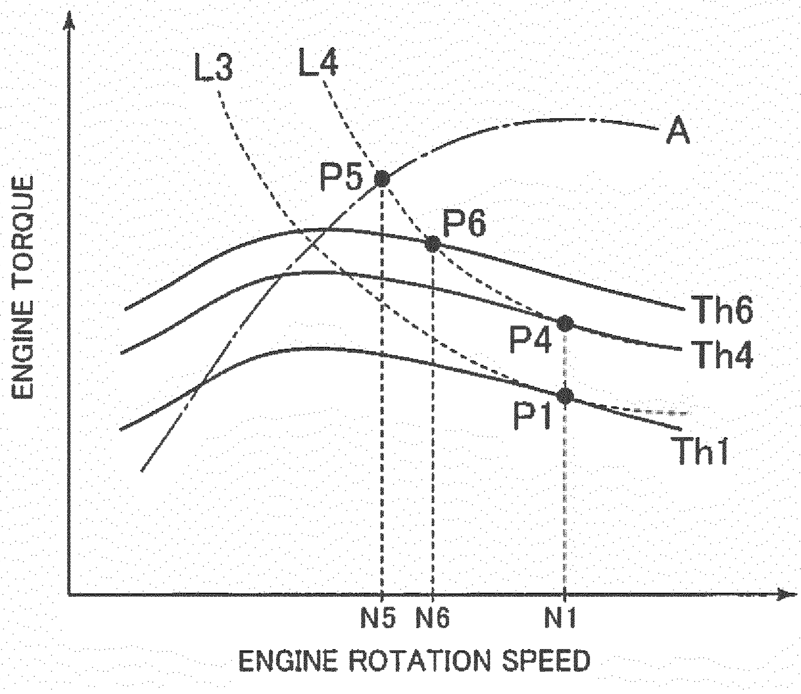
ENGINE TORQUE
L3
L4
A
P5
P6
Th6
P4
Th4
P1
Th1
N5
N6
N1
ENGINE ROTATION SPEED

FIG.4

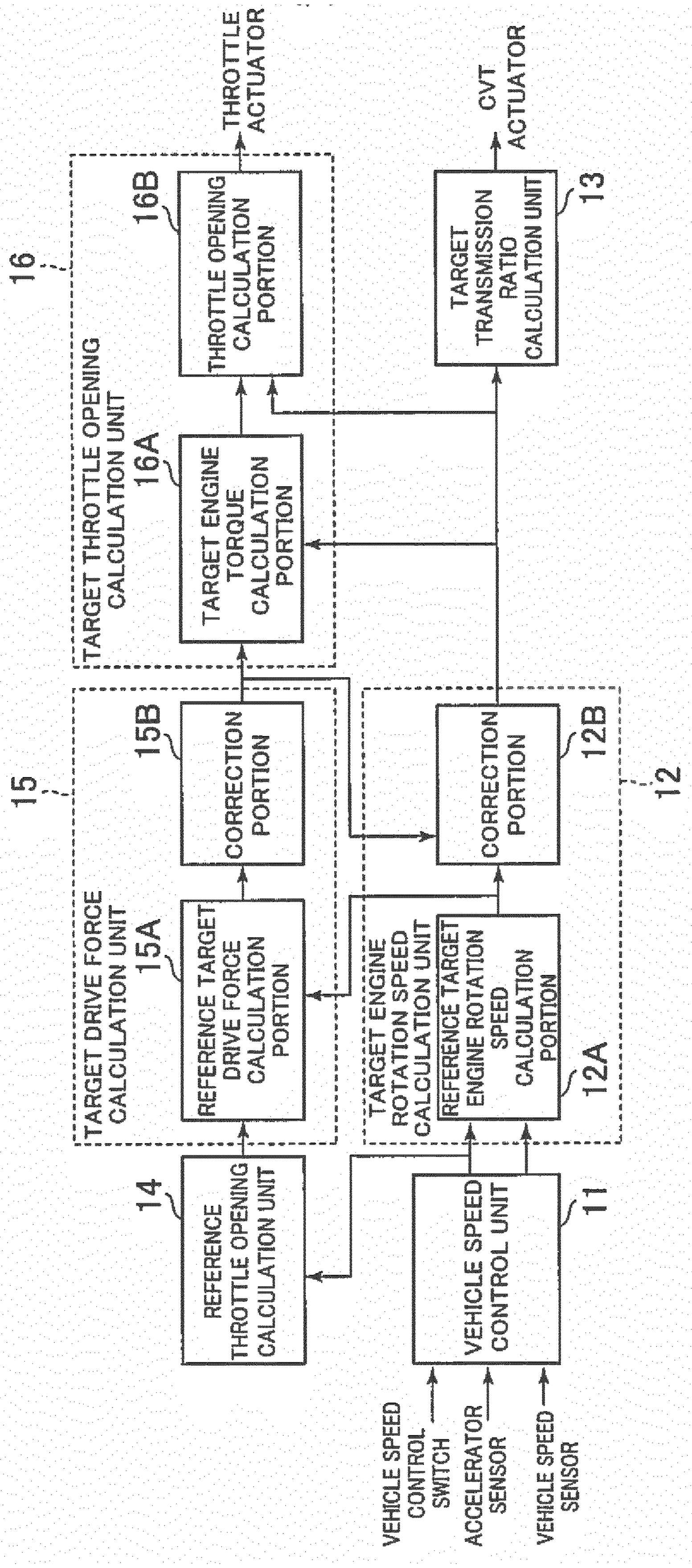
VEHICLE SPEED CONTROL SWITCH
ACCELERATOR SENSOR
VEHICLE SPEED SENSOR
VEHICLE SPEED CONTROL UNIT
11
REFERENCE THROTTLE OPENING CALCULATION UNIT
14
TARGET DRIVE FORCE CALCULATION UNIT
15
REFERENCE TARGET DRIVE FORCE CALCULATION PORTION
15A
CORRECTION PORTION
15B
TARGET ENGINE ROTATION SPEED CALCULATION UNIT
12
REFERENCE TARGET ENGINE ROTATION SPEED CALCULATION PORTION
12A
CORRECTION PORTION
12B
TARGET THROTTLE OPENING CALCULATION UNIT
16
TARGET ENGINE TORQUE CALCULATION PORTION
16A
THROTTLE OPENING CALCULATION PORTION
16B
THROTTLE ACTUATOR
TARGET TRANSMISSION RATIO CALCULATION UNIT
13
CVT ACTUATOR

FIG.5

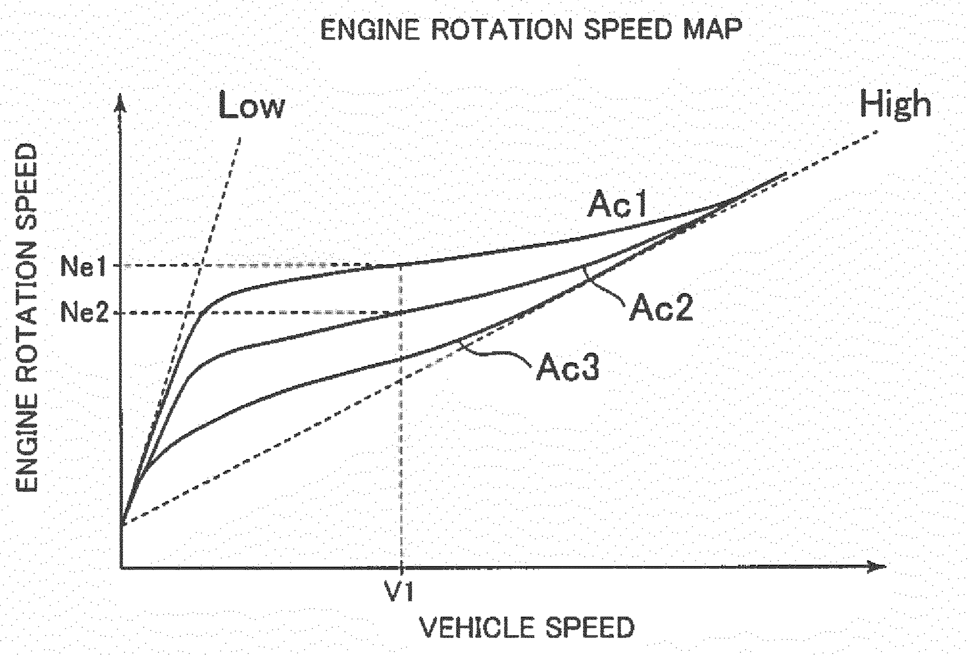
ENGINE ROTATION SPEED MAP
Low
High
ENGINE ROTATION SPEED
Ne1
Ne2
Ac1
Ac2
Ac3
V1
VEHICLE SPEED

FIG.6

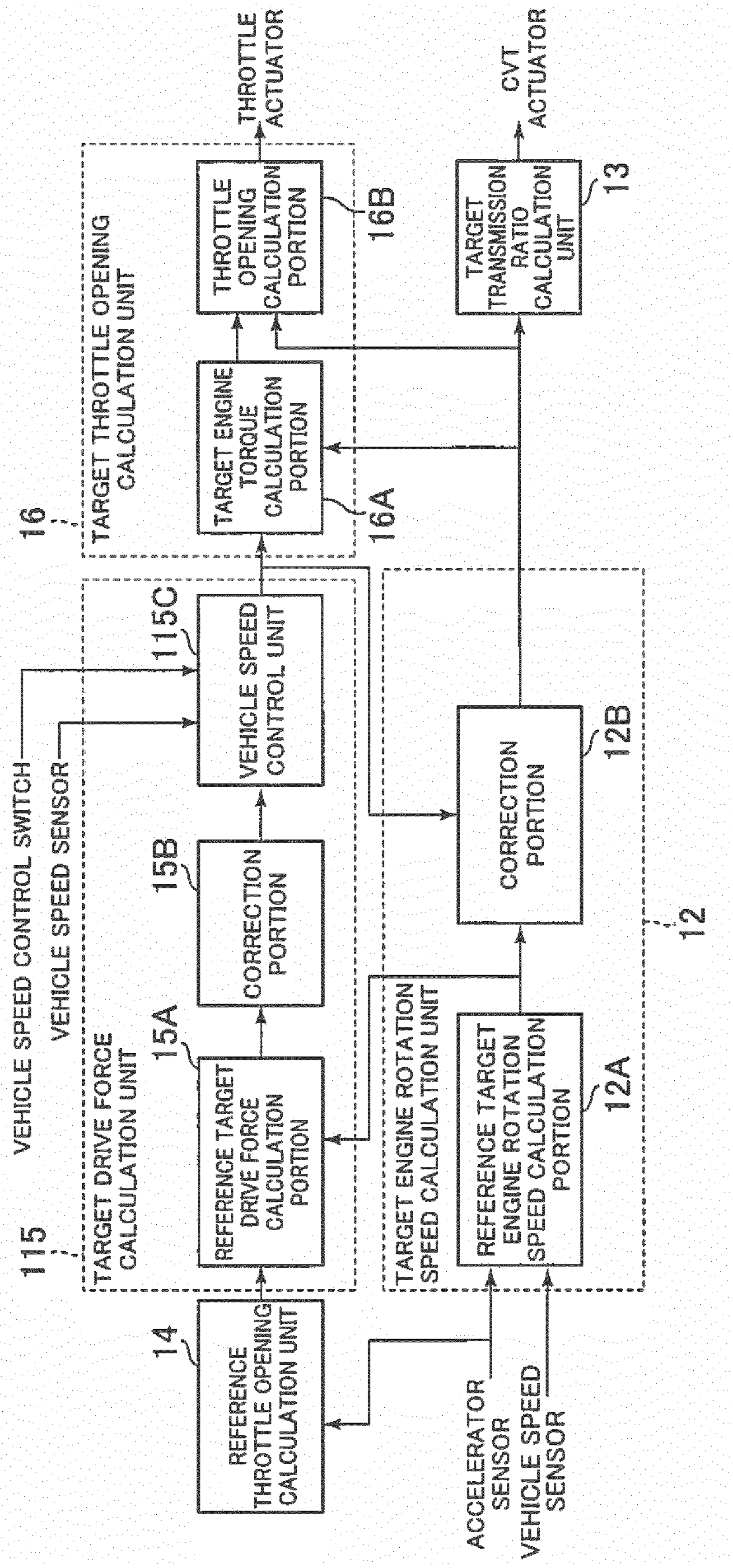
THROTTLE ACTUATOR
CVT ACTUATOR
TARGET THROTTLE OPENING CALCULATION UNIT
16
THROTTLE OPENING CALCULATION PORTION
16B
TARGET ENGINE TORQUE CALCULATION PORTION
16A
TARGET TRANSMISSION RATIO CALCULATION UNIT
13
VEHICLE SPEED CONTROL SWITCH
VEHICLE SPEED SENSOR
115C
VEHICLE SPEED CONTROL UNIT
CORRECTION PORTION
12B
15B
CORRECTION PORTION
12
TARGET DRIVE FORCE CALCULATION UNIT
115
15A
REFERENCE TARGET DRIVE FORCE CALCULATION PORTION
TARGET ENGINE ROTATION SPEED CALCULATION UNIT
REFERENCE TARGET ENGINE ROTATION SPEED CALCULATION PORTION
12A
14
REFERENCE THROTTLE OPENING CALCULATION UNIT
ACCELERATOR SENSOR
VEHICLE SPEED SENSOR

FIG. 7

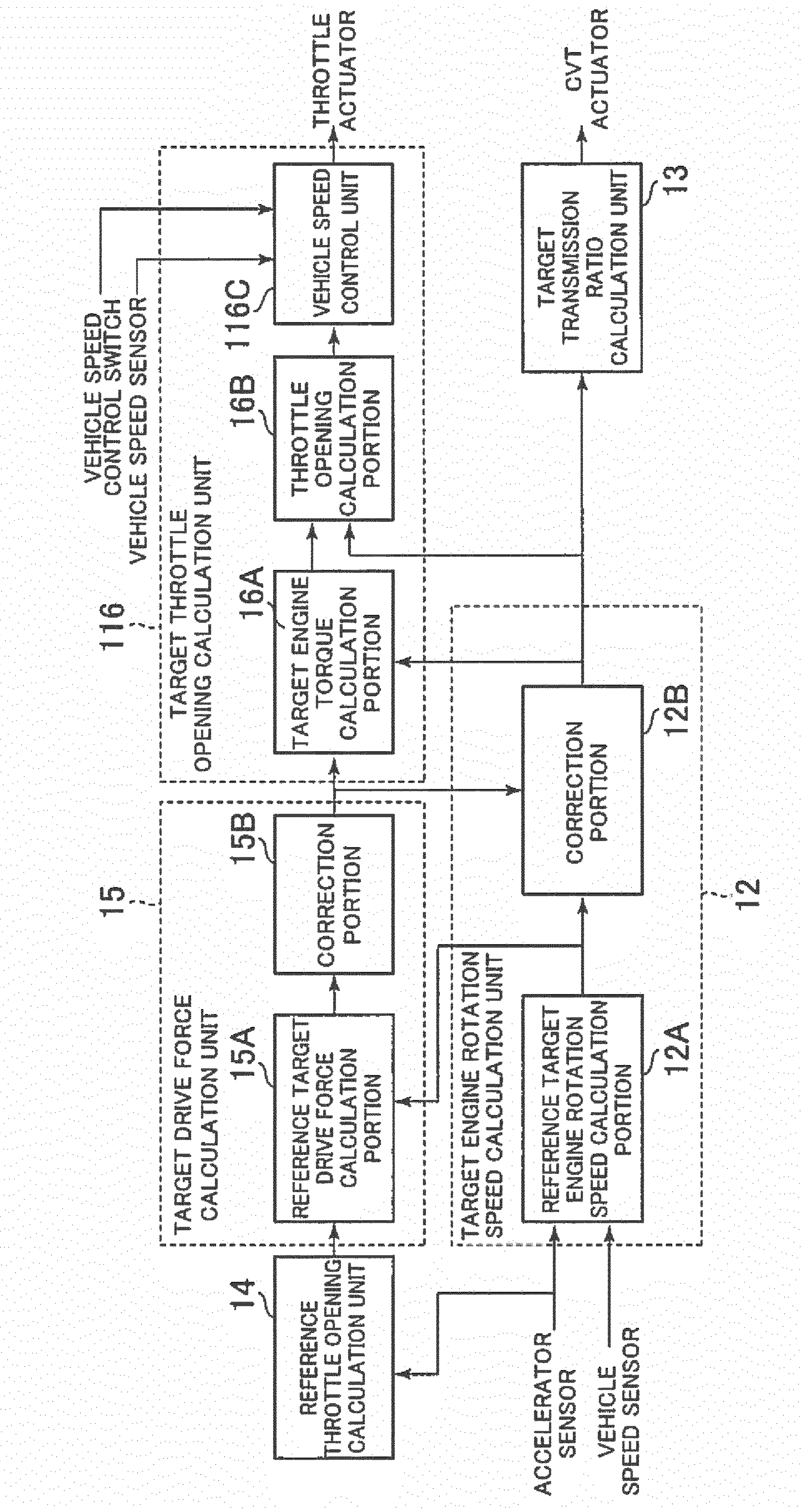
REFERENCE THROTTLE OPENING CALCULATION UNIT
14
ACCELERATOR SENSOR
VEHICLE SPEED SENSOR
15
TARGET DRIVE FORCE CALCULATION UNIT
15A
REFERENCE TARGET DRIVE FORCE CALCULATION PORTION
15B
CORRECTION PORTION
12
TARGET ENGINE ROTATION SPEED CALCULATION UNIT
12A
REFERENCE TARGET ENGINE ROTATION SPEED CALCULATION PORTION
12B
CORRECTION PORTION
116
TARGET THROTTLE OPENING CALCULATION UNIT
16A
TARGET ENGINE TORQUE CALCULATION PORTION
16B
THROTTLE OPENING CALCULATION PORTION
116C
VEHICLE SPEED CONTROL UNIT
VEHICLE SPEED CONTROL SWITCH
VEHICLE SPEED SENSOR
THROTTLE ACTUATOR
TARGET TRANSMISSION RATIO CALCULATION UNIT
13
CVT ACTUATOR

**INTERNATIONAL SEARCH REPORT**

International application No. PCT/JP2014/056585

A. CLASSIFICATION OF SUBJECT MATTER
*B60W10/04*(2006.01)i, *B60W10/06*(2006.01)i, *B60W10/101*(2012.01)i, *B60W30/14*(2006.01)i, *F02D11/10*(2006.01)i, *F02D41/04*(2006.01)i, *F16H61/02*(2006.01)i, *F16H61/66*(2006.01)i

According to International Patent Classification (IPC) or to both national classification and IPC

B. FIELDS SEARCHED

Minimum documentation searched (classification system followed by classification symbols)
B60W10/04-10/06, B60W10/10-10/109, B60W30/14-30/17, F02D11/10, F02D41/00-41/40, F16H61/02, F16H61/66-61/662

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2010-284989 A (Daihatsu Motor Co., Ltd.), 24 December 2010 (24.12.2010), paragraphs [0002] to [0007], [0018] to [0020] (Family: none) | 1-7 |
| Y | JP 2005-155410 A (Nissan Motor Co., Ltd.), 16 June 2005 (16.06.2005), claims (Family: none) | 1-7 |
| Y | WO 2012/017709 A1 (Yamaha Motor Co., Ltd.), 09 February 2012 (09.02.2012), paragraphs [0002], [0013] to [0041] & EP 2602463 A1 & US 2013/0131940 A1 | 7 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>09 June, 2014 (09.06.14) | Date of mailing of the international search report<br>17 June, 2014 (17.06.14) |
| Name and mailing address of the ISA/<br>Japanese Patent Office<br>Facsimile No. | Authorized officer<br>Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3754188 B